Europäisches Patentamt

(19) European Patent Office

Office européen des brevets

(11) Veröffentlichungsnummer: **0 047 330**
**B1**

(12) **EUROPÄISCHE PATENTSCHRIFT**

(45) Veröffentlichungstag der Patentschrift: **13.06.84**

(21) Anmeldenummer: **80105339.8**

(22) Anmeldetag: **06.09.80**

(51) Int. Cl.³: **G 11 B 5/62,** G 11 B 5/70,
G 11 B 5/82, H 01 F 10/28

(54) Magnetplatten-Trägerkern aus faserverstärktem Kunststoff.

(43) Veröffentlichungstag der Anmeldung:
17.03.82 Patentblatt 82/11

(45) Bekanntmachung des Hinweises auf die Patenterteilung:
13.06.84 Patentblatt 84/24

(84) Benannte Vertragsstaaten:
AT BE CH DE FR GB IT LI NL SE

(56) Entgegenhaltungen:
DE - A - 1 953 079
DE - A - 2 016 178
DE - A - 2 237 247
DE - B - 1 299 029
US - A - 3 839 133

(73) Patentinhaber: IBM DEUTSCHLAND GMBH
Pascalstrasse 100
D-7000 Stuttgart 80 (DE)
(84) DE
(73) Patentinhaber: International Business Machines
Corporation
Old Orchard Road
Armonk, N.Y. 10504 (US)
(84) BE CH FR GB IT LI NL SE AT

(72) Erfinder: Frosch, Albert
Geranienstrasse 22
D-7033 Herrenberg 1 (DE)
Erfinder: Hinkel, Holger, Dr.
Zeisigweg 13
D-7030 Böblingen (DE)
Erfinder: Kraus, Georg
Im Heinental 70
D-7277 Wildberg 4 (DE)
Erfinder: Künzel, Ulrich, Dr.
Wennfeldergarten 30
D-7400 Tübingen (DE)
Erfinder: Rogalla, Dietrich, Dr.
Onstmettinger Weg 5
D-7000 Stuttgart-Möhringen (DE)
Erfinder: Schneider, Jochen
Burgenstrasse 39
D-7031 Rohrau (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

(74) Vertreter: **Gaugel, Heinz, Dipl.-Ing. et al,**
**Schönaicher Strasse 220**
**D-7030 Böblingen (DE)**

## Beschreibung

Die Erfindung betrifft einen Magnetplatten-Trägerkern aus einem Laminat aus dünnen Lamellen aus Kunststoff. Ein solcher Magnetplatten-Trägerkern ist aus DE—B—1 299 029 (IBM) bekannt.

Gemäß dem deutschen Patent 1 299 029 ist es bei der Herstellung von Magnetplatten auch bekannt, Trägerkerne zu verwenden, die aus Fasern enthaltendem Kunststoff bestehen. Dieser Trägerkern wird zusammen mit Magnetfolien in eine Pressform gebracht und zu einer Magnetplatte verpresst. Neben der Tatsache, daß dieser bekannte Trägerkern keine im wesentlichen isotrope Lamellenstruktur aufweist, ist er auch nicht dafür geeignet, die nach heutigen und zukünftigen Notwendigkeiten erforderlichen hohen Drehzahlen zur erzielen.

Laminate aus faserverstärkten Kunststofflamellen, wobei die Fasern in den einzelnen Lamellen parallel zueinander ausgerichtet sind und die Fasern aufeinanderfolgender Lamellen sich unter gleichbleibenden Winkeln in der Größe von 0° bis 60° überkreuzen, sind aus DE—B—2 237 247 (Hopkins University) und US—A—3 839 133 (Heighes) bekannt. Diese Laminate finden Verwendung als Schwungräder bzw. als Halteringe für Transformatoren.

Steigende Drehzahlen von Magnetplatten sind bei extrem hohen Speicherdichten nötig. Dabei tritt zunehmend das Problem von Schwingungen der Platte in axialer Richtung, d.h. in Richtung parallel zur Rotationsachse der Platte, mehr und mehr in dem Vordergrund. Bei rotierenden Platten existieren zwei Resonanzfrequenzen, von denen eine, wie Untersuchungen von S. A. Tobias und R. N. Arnold, "The Influence of Dynamical Imperfection on the Vibration of Rotating Disks" PROC. I.M.E., Vol. 171, No. 22 (1957), 669—690, ergeben haben, deswegen besonders kritisch ist, weil bei einer bestimmten Drehzahl $\Omega_c$ bereits eine geringfügige statische Last ausreicht, um die Resonanz zu erreichen. Eine solche geringfügige statische Last stellt das Aufliegen des Magnetkopfes auf oder sein Schweben über der Magnetplatte dar. Man ist also gezwungen, unterhalb dieser kritischen Drehzahl die Magnetplatte zu betreiben.

Zur Erhöhung der Eigenfrequenz von Magnetplatten und um Schwingungen parallel zur Rotationsachse zu dämpfen, beides gedacht zur Erzielung höherer Drehzahlen, ist es gemäß der deutschen Offenlegungsschrift 1 953 079 bekannt, die Magnetplatten unterschiedlich stark mechanisch zu verstärken. Dazu sind Platten mit nach außen hin abnehmendem Durchmesser auf einer oder auf beiden Seiten der eigentlichen Magnetplatte vorgesehen. Diese zusätzlichen Platten sind in der Mitte mit der Magnetplatte fest verbunden und auf ihrer Außenseite angeordnet. Dadurch entsteht Reibung zwischen der Magnetplatte und den zusätzlichen Verstärkungsplatten, wenn sich die Magnetplatte in Richtung der Rotationsachse verbiegt. Aufgrund dieser Reibung, die insbesondere bei hoher Geschwindigkeit, d.h. bei hohen Frequenzen, auftritt, werden diese höherfrequenten Schwingungen wohl gut gedämpft. Sehr niederfrequente Schwingungen, wie sie in der Nähe der bereits weiter oben genannten kritischen Plattendrehzahl auftreten, werden jedoch schlecht gedämpft. Man muß davon ausgehen, daß die kritische Drehzahl durch Zerlegung der Platten in mehrere Einzelplatten bzw. das Hinzufügen von weiteren Platten mit nach außen hin abnehmendem Durchmesser, die kritische Drehzahl erniedrigt wird. Aus diesem Grund erscheint auch diese bekannte Lösung nicht in der Lage zu sein, Magnetplatten bzw. Magnetplatten-Trägerkerne bereitzustellen, die in ihrer Drehzahl wesentlichen über die heutige übliche hinaus gesteigert werden können.

Aus der deutschen Auslegeschrift 2 016 178 ist eine Magnetplattenstruktur bekannt, die im Kern eine bienenwabenartige Struktur aufweist und die außen mit metallischen Schichten belegt ist. Diese Bienenwabenstruktur, bei der sich die Bienenwaben in Richtung der Rotationsachse erstrecken, und die dann mit beispielsweise Kupferplatten verschlossen sind, dient zur Dämpfung mechanischer Schwingungen parallel zur Rotationsachse, um auch wiederum höhere Rotationsgeschwindigkeiten bei einer höheren Eigenfrequenz des Plattenkerns zu erreichen.—Ein wesentlicher Nachteil ist die nötige Dicke dieser Platte. Untersuchungen haben gezeigt, daß für das Erreichen derselben kritischen Drehgeschwindigkeit wie bei den heute üblichen AlMg5 Magnetplatten-Trägerkernen von 3 mm Dicke, die aus der deutschen Auslegeschrift 2 016 178 bekannte "Beinenwaben"-Platte dicker als 1 cm sein muß, wenn Kupferplatten von 0,3 bis 0,5 mm Dicke als Außenflächen benutzt werden. Eine höhere Dicke der Platten bedeutet jedoch, daß die Anzahl der Platten pro Stapel geringer ist. Ein weiterer Nachteil dieser Bienenwabenstruktur besteht darin, daß diese bei Verbiegung wegen der Zipfelbildung nicht eben bleibt, was bei den extrem hohen Ebenheitsforderungen zu Problemen führt.

Die Erfindung, wie sie im Patentanspruch 1 gekennzeichnet ist, löst die Aufgabe, einen Magnetplatten-Trägerkern aus faserverstärktem Kunststoff zu schaffen, welcher für sehr hohe Drehzahlen—höher als heute üblich und möglich—geeignet ist und der—aus anisotropem Material zusammengesetzt—in seinem Verhalten im wesentlichen isotrop ist.

Die durch die Erfindung erreichten Vorteile sind im wesentlichen darin zu sehen, daß ein Magnetplatten-Trägerkern mit isotropen, mechanischen Eigenschaften in der Plattenebene bei nur geringer Restanisotropie des Beigemoduls geschaffen ist, der leichter als herkömmlich verwendete Plattensubstrate (z.B. AlMg5) ist und höhere Drehzahlen ohne unkalkulierbares und störendes Schwingungsverhalten zuläßt. Ein weiterer wesentlicher Vorteil ist darin zu sehen, daß dieser erfindungsgemäß gestaltet Trägerkern das Problem der Galvanokorrosion, das zwischen metallischem Trägerkern und metallischer Magnetschicht ganz gravierend ist, vollständig ausschließt. Der Magnetplatten-Trägerkern gemäß der Erfindung ist somit sowohl für partikulare Magnetschichten als auch für metallische, magnetische Dünnfilmschichten eine hervorrangende Basis. Die Notwendigkeit von nur wenigen Ablagewinkeln und nur einer Art oder weniger Arten von unterschiedlich gestalteten dünnen vorimprägnierten Lamellen, sogenannte Prepregs, ermöglicht eine einfache Herstellung des erfindungsgemäßen Trägerkerns.

Die gemäß der Ausführung der Erfindung vorgesehene Verstärkung der äußeren Lamellen, beispielsweise durch Verwendung von Kohlefasern, wenn im inneren Glasfasern verwendet werden oder von Kohlefasern mit höherem Elastizitätsmodul, gegenüber den inneren, bringt den Vorteil, den Biegemodul überproportional gegenüber dem Schubmodul in der Plattenebene zu vergrößern, was der Verbesserung der kritischen Drehzahl besonders zugute kommt.

Im folgenden wird die Erfindung anhand der lediglich einen Ausführungsweg darstellenden Zeichnung näher erläutert.

Es zeigt:

Fig. 1 in perspektivischer Ansicht schematisch und auseinandergezogen die übereinanderliegende, winkelmäßig unterschiedliche Anordnung der einzelnen dünnen und anisotropen, faserverstärkten Kunststofflamellen und

Fig. 2 ein Ablageschema für ein 48 Lamellen umfassendes Laminat mit 60° Ablagewinkel $\theta$.

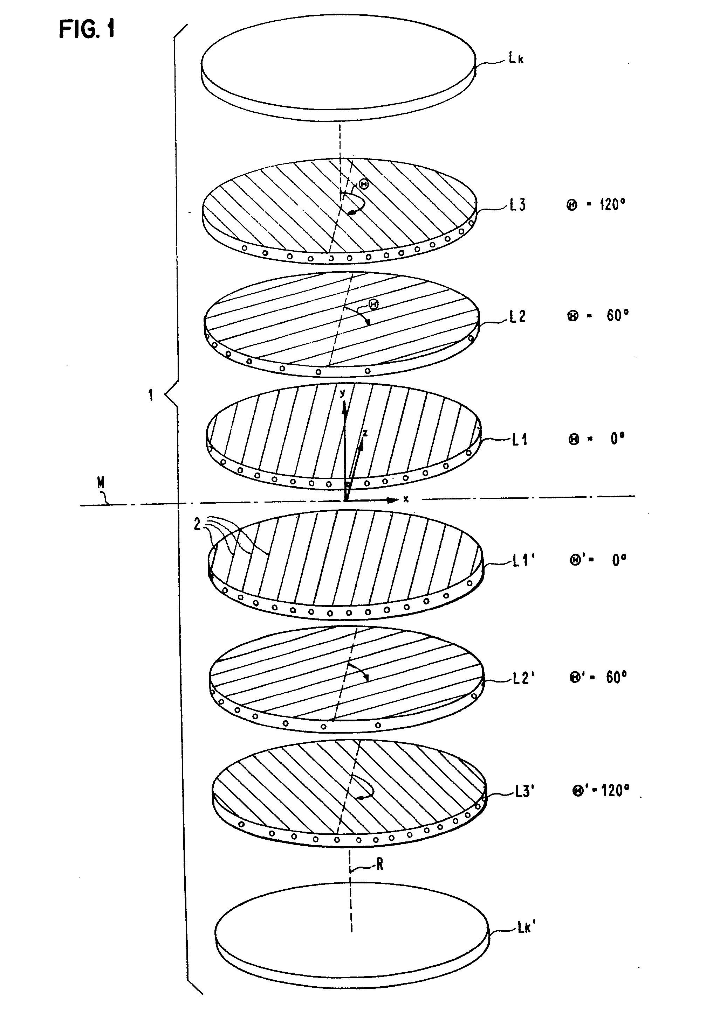

Der in Fig. 1 dargestellte Magnetplatten-Trägerkern 1 um faßt eine Reihe von einzelnen Lamellen L1, L1', L2, L2' bis Lk, Lk'. Diese einzelnen Lamellen enthalten Fasern 2, die jeweils innerhalb einer Lamelle L in ein und derselben Richtung verlaufen. Diese einzelnen Lamellen sind unter verschiedenen Ablagewinkeln $\theta$ aufeinander abgelegt und werden unter Erwärmung zum Trägerkern 1 zusammengeproßt.

Die einzelne Lamelle L ist von den Fasern 2 in ein und derselben Richtung durchsetzt. Die Fasern 2 können Glasfasern oder Kohlenfasern sein. Ihre Dicke kann bei Kohlefasern ca. 5 bis 10 $\mu$m, bei Glasfasern etwas mehr betragen. Die Lamellendicke liegt bei handelsüblich erhältlichen Lamellen bei ca. 0,1 bis 0,15 mm. Aufgrund der geringen Dicke der einzelnen Glas- bzw. Kohlefasern können jedoch wesentlich dünnere Lamellen möglich sein. Der Füllfaktor, d.h. der Anteil von Fasern im Harzmaterial beträgt etwa 60 Vol.%. Die Fasern 2 selbst gehen von einem Rand zum anderen Rand der einzelnen Lamelle L vollständig durch, sie haben also jeweils die Länge einer Sehne der runden Lamelle.

Betrachtet man die einzelne, vorimprägnierte, mit Fasern verstärkte Kunststofflamelle, sogenanntes Prepreg, so ist klar, daß diese Lamelle in Bezug auf ihre mechanischen Eigenschaften in ihrer Ebene sowohl bei Zug als auch bei Biegung und Schub anisotrop ist. Ein Magnetplatten-Trägerkern muß jedoch in seinem mechanischen Verhalten in der Plattenebene x-z, als auch in seinem Biegeverhalten bei Schwingungen parallel zur Rotationsachse R, d.h. in y-Richtung (vergleiche Fig. 1) möglichst isotrop sein.

Zur Erzielung einer besseren Isotropie für den Schubmodul und den Zugmodul in der Plattenebene x-z würder man üblicherweise erwarten, daß man die einzelnen Lamellen L unter möglichst vielen Ablagewinkeln, d.h. mit möglichst kleinem Winkel zwischen den Richtungen der Fasern 2, ablegt. Beispielsweise könnten dies die Winkel 0°, 22,5°, 45°, 67,5°, 90°, 112,5°, 135°, 157,5° sein. Dabei allerdings verschlechtert sich die Isotropie des Biegemoduls bei Biegung um eine Achse in der Plattenebene x-z, d.h. bei einer Schwingung in Richtung y. Bei der Isotropie des Biegemoduls bzw. beim Biegemodul spielen die äußeren Lamellen eine wesentlich größere Rolle als die inneren Lamellen in der Umgebung der neutralen Mittelebene M. Wird der volle Winkel von 360° durch viele Lamellen mit kleinen Winkelschritten realisiert, dann wird die Isotropie des Biegemoduls klein.

Trotz dieser in entgegengesetzte Richtungen auseinanderstrebenden Voraussetzungen hat sich herausgestellt, daß Zugmodul und Schubmodul in der Plattenebene x-z für alle Ablagewinkel $\theta$, die kleiner als bzw. gleich 60° sind, vollständig isotrop sind. Der Ablagewinkel ist dabei ein ganzzahliger Teil von $\pi$, wobei die kleinste ganze Zahl 3 ist, d.h. $\theta = \pi/n$ mit $n \geq 3$ und ganzzahlig. Nach einer ganzzahlingen Anzahl von Lamellen muß der volle Winkel von 360° erreicht werden. Es ergibt sich damit auch weiterhin die Möglichkeit, Laminate herzustellen, welche im Hinblick auf den Biegemodul weitgehend isotrop sind. Bei dem größtmöglichen Ablagewinkel $\theta$ von 60°, wie er in den Figurendarstellungen auch gezeigt ist, bei dem der Schub- und Zugmodul isotrop ist, wird der volle Winkel von 360° durch die Ablage von nur drei Lamellen L1 bis L3 erzielt. Damit wird auch gleichzeitig die geringste Anisotropie des Biegemoduls realisiert.

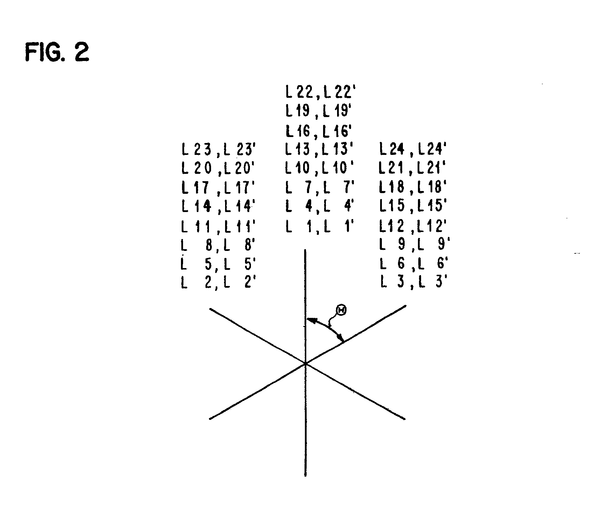

Damit das Verhalten des Magnetplatten-Trägerkerns 1, wie er in Fig. 1 dargestellt ist, möglichst isotrop in allen Hinsichten ist, baut man ihn zweckmäßigerweise so auf, daß oberhalb der Mittellinie M gleich viele Lamellen L1 bis Lk aufeinander abgelegt sind wie unterhalb der Mittellinie M mit den Lamellen L1' bis Lk'. Dabei sind die einander entsprechenden Lamellen, beispielsweise L1, L1' bzw. L2, L2' bzw. Lk, Lk' immer in demselben Ablagewinkel $\theta$ angeordnet. Einer Lamelle auf einer Seite der Mittelebene M entspricht also auf der anderen Seite der Mittelebene M ebenfalls eine Lamelle, die dieselbe Ordnungszahl trägt und in demselben Ablagewinkel abgelegt ist. Ein Ablageschema dieser Art ist in Fig. 2 näher dargestellt.

Neben dem in Fig. 2 gezeigten Ablageschema, welches auf der Art des Aufbaus von Fig. 1 beruht, bei dem zwei Lagen mit gleichem Winkel unmittelbar ober- und unterhalb der Mittelebene M gezeigt sind, sind auch solche Ablageschema möglich, bei denen eine Lamelle mit ihrer Mitte genau auf der Mittelebene M angeordnet ist. Es sind dann jeweils oberhalb und unterhalb dieser Lamelle eine durch drei teilbare Anzahl von Lamellen anzuordnen. Dies Schema trifft bei der Voraussetzung zu, daß der Ablagewinkel 60° beträgt. Gute Ergebnisse wurden bereits bei Laminaten erzielt, die 15 Lagen bzw. Lamellen enthielten.

Verwendet man reine Kohlenfaserlamellen, bei denen der Young'sche Elastizitätsmodul zwischen ca. 180 und $360 \times 10^9$ N/m² beträgt, so liegt die kritische Drehzahl bereits um 25 bis 30% oberhalb der von AlMg5-Plattensubstraten, jedoch bei wesentlich geringerem Gewicht. Berechnungen zeigen, daß bei 24 Lagen, wovon jeweils drei Lagen ober- und unterhalb der Mittellinie außen aus kohlefaserverstärkten und die inneren achtzehn Lagen aus glasfaserverstärkten Lamellen L bestehen, mindestens die Werte der kritischen Drehzahl $\Omega_c$ bringen, wie die AlMg5-Plattensubstrate.

Je höher die Anzahl der einzelnen Lagen ist, umso besser wird die Isotropie des Biegemoduls. Berechnungen zeigen, daß der Biegemodul eine Restanisotropie von nur noch 10% aufweist, wenn 48 Lamellen verwendet werden. Bei dünner werdenden Lamellen läßt sich bei gleicher Endstärke des Trägerkerns 1 eine höhere Anzahl von Lamellen aufeinander aufbringen, was zu einer weiteren Verbesserung des Biegemoduls führt.

Gemäß der Ausführung der Erfindung ist ein anisotroper Aufbau des Trägerkerns 1 vorgesehen, um damit Schubmodul und Biegemodul unabhängig voneinander so zu beeinflussen, daß die kritische Drehzahl $\Omega_c$ weiter vergrößert wird. Werden die Trägerkerne in den oberflächennahen Lamellen verstärkt, beispielsweise durch Vergrößerung des Zug-/Druck-Moduls, so werden der Biegemodul und der Schubmodul in der Plattenebene x-z unterschiedlich beeinflußt. Der Schubmodul wächst nur proportional zum Volumanteil des verstärkten Bereichs, der Biegemodul dagegen überproportional, weil dieser fast ausschließlich durch die Eigenschaften der oberflächennahen Schichten bestimmt wird. Diese Überproportionalität geht mit der zweiten Potenz des Abstands von der neutralen Mittelebene M in das Ergebnis ein.

Die Erhöhung der kritischen Drehzahl $\Omega_c$ durch anisotropen Aufbau des Trägerkerns 1 bzw. die Verstärkung der oberflächennahen Lamellen ist dadurch realisierbar, daß man bei gleichem Material die Dichte $\rho$ der äußeren Lamellen kleiner wählt als die der inneren, was beispielsweise durch Verwenden eines geeigneten anderen Harzes zu verwirklichen ist. Eine zusätzliche Möglichkeit besteht darin, daß der Elastizitätsmodul und/oder die Querkontraktionszahl der äußeren Lamellen größer gewählt wird als derjenige der inneren Lamellen. Des weiteren kann, beispielsweise bei Verwendung von mit Kohlefasern verstärkten Prepregs, die Verstärkung Zusätzlich dadurch erfolgen, daß für die äußeren Lamellen solche verwendet werden, die Kohlefasern mit höherem Elastizitätsmodul enthalten.

Eine weitere Möglichkeit, den anisotropen Aufbau des Trägerkerns 1 zu beeinflussen der von der Kostenseite besonders interessant erscheint, besteht darin, daß die inneren Lagen aus billigeren glasfaserverstärkten Lamellen und die äußeren Lagen aus den nicht so preiswerten kohlefaserverstärkten Lamellen hergestellt werden.

**Patentansprüche**

1. Magnetplatten-Trägerkern aus einem Laminat, aus dünnen Lamellen (L1, L2, ..., Lk) aus Kunststoff, dadurch gekennzeichnet, daß die Lamellen durch jeweils parallel zueinander ausgerichtete Fasern (2) verstärkt sind, daß diese anisotropen Lamellen unter gleichbleibenden, möglichst großen Winkelabständen im Bereich von 0° bis 60° aufeinander abgelegt sind und daß die Dichte der äußeren Lamellen kleiner als die der inneren Lamellen gewählt ist.

2. Magnetplatten-Trägerkern nach Anspruch 1, dadurch gekennzeichnet, daß die einzelnen Lamellen (L1 bis Lk) unter einem Winkel von 0°, einem von +60° und einem von −60° aufeinander abgelegt sind.

3. Magnetplatten-Trägerkern nach einem der vorigen Ansprüche, dadurch gekennzeichnet, daß der Laminataufbau symmetrisch zur Mittelebene (M) des Trägerkerns (1) ist bzw. ober- und unterhalb der Mittelebene (M) gleich viel Lamellen (L1 bis Lk bzw. L1' bis Lk') angeordnet sind.

4. Magnetplatten-Trägerkern nach einem der vorigen Ansprüche, dadurch gekennzeichnet, daß jeder Lamelle (L1, L2, ..., Lk), die in einem bestimmten Ablagewinkel ($\theta$) auf der einen Seite der Mittelebene (M) des Trägerkerns (1) abgelegt ist, eine Lamelle (L1', L2', ..., Lk') mit dem gleichen Ablagewinkel ($\theta'$) auf der anderen Seite der Mittelebene (M) des Trägerkerns (1) zugeordnet ist bzw. alle Winkelrichtungen gleich häufig vorgesehen sind.

5. Magnetplatten-Trägerkern nach einem der vorigen Ansprüche, dadurch gekennzeichnet, daß der Trägerkern (1) aus bis zu 72 Lamellen (L) aufgebaut ist.

6. Magnetplatten-Trägerkern nach einem der vorigen Ansprüche, dadurch gekennzeichnet, daß der Elastizitätsmodul und/oder die Querkontraktionszahl der äußeren Lamellen größer oder gleich ist der- bzw. demjenigen der inneren Lamellen.

7. Magnetplatten-Trägerkern nach einem der vorigen Ansprüche, dadurch gekennzeichnet, daß der Elastizitätsmodul der Fasern in den äußeren Lamellen größer ist als in den inneren.

8. Magnetplatten-Trägerkern nach Anspruch 7, dadurch gekennzeichnet, daß die äußeren Lamellen (L) Kohlefasern und die inneren Lamellen (L) Glasfasern enthalten.

## Revendications

1. Support pour disques magnétiques constitué par un ensemble de couches minces (L1, L2, ..., LK) en matière plastique, caractérisé en ce que les dites couches sont renforcées par des fibres (2) alignées de façon parallèle les unes par rapport aux autres, que lesdites couches anisotropes sont empilées les unes sur les autres selon des écarts angulaires constants les plus grands possibles dans une fourchette entre 0° et 60°, que l'épaisseur des couches externes est inférieure à celle des couches internes.

2. Support pour disques magnétiques selon la revendication 1, caractérisé en ce que les différentes couches (L1 à LK) sont empilées les unes sur les autres selon un angle de 0°, un angle plus 60° et un angle moins 60°.

3. Support pour disques magnétiques selon une des revendications précédentes, caractérisé en ce que la structure de couches est symétrique par rapport au plan médian (M) dudit support (1) et qu'il est prévu un nombre égal de couches (L1 à LK, voire L1' à LK') au-dessus et au-dessous dudit plan médian (M).

4. Support pour disques magnétiques selon une des revendications précédentes, caractérisé en ce qu'à chacune desdites couches (L1, L2, ... LK) disposées selon $\theta$ d'un côté dudit plan médian dudit support (1) est associée une couche (L1', L2' ... LK') disposée selon le même angle ($\theta'$) de l'autre côté dudit plan médian (M) dudit support (1) et présentant autant de directions angulaires.

5. Support pour disques magnétiques selon une des revendications précédentes, caractérisé en ce que ledit support (1) peut comporter jusqu'à 72 couches (L).

6. Support pour disques magnétiques selon une des revendications précédentes, caractérisé en ce que le module d'élasticité et/ou la quantité de contractions transversales desdites couches externes sont supérieurs ou égaux à ceux des couches internes.

7. Support pour disques magnétiques selon une des revendications précédentes, caractérisé en ce que ledit module d'élasticité desdites fibres dans lesdites couches externes est supérieur à celui desdites fibres dans lesdites couches internes.

8. Support pour disques magnétiques selon la revendication 7, caractérisé en ce lesdites couches externes (L) contiennent des fibres en carbone et lesdites couches internes (L) des fibres en verre.

## Claims

1. A magnetic disk substrate comprising a laminate of thin plastic lamellae (L1, L2, ..., Lk), characterized in that said lamellae are reinforced by fibers (2) aligned in parallel to each other, that said anisotropic lamellae are arranged on top of each other at angular distances that are as large as possible, ranging from 0 to 60°, and that the density of the outer lamellae is lower than that of the inner lamellae.

2. A magnetic disk substrate according to claim 1, characterized in that the individual lamellae (L1 to Lk) are arranged on top of each other at angles of 0, +60 and −60°.

3. A magnetic disk substrate according to any one of the preceding claims, characterized in that the laminate structure extends respectively symmetrically to the center plane (M) of said substrate (1) and comprises an identical number of lamellae (L1 to Lk and L1' to Lk', respectively) above and below said center plane (M).

4. A magnetic disk substrate according to any one of the preceding claims, characterized in that with each lamellae (L1, L2, ..., Lk), arranged at a particular angle of arrangement ($\theta$) on one side of said center plane (M) of said substrate (1), there is associated one lamella (L1', L2', ..., Lk') with the same angle of arrangement ($\theta'$) on the other side of said center plane (M) of said substrate (1), and all angular directions are provided equally frequently.

5. A magnetic disk substrate according to any one of the preceding claims, characterized in that said substrate (1) is made up of up to 72 lamellae (L).

6. A magnetic disk substrate according to any one of the preceding claims, characterized in that the Young's modulus and/or the Poisson's ratio of the outer lamellae are greater than or equal to those of the inner lamellae.

7. A magnetic disk substrate according to any one of the preceding claims, characterized in that the Young's modulus of the fibers in the outer lamellae is greater than that in the inner lamellae.

8. Magnetic disk substrate according to claim 7, characterized in that the outer lamellae (L) contain carbon fibers and the inner lamellae (L) glass fibers.

FIG. 1

0 047 330

1

## FIG. 2

```
                    L 22, L 22'
                    L 19 , L 19'
                    L 16 , L 16'
   L 23 , L 23'     L 13 , L 13'      L 24 , L 24'
   L 20 , L 20'     L 10 , L 10'      L 21 , L 21'
   L 17 , L 17'     L 7 , L 7'        L 18 , L 18'
   L 14 , L 14'     L 4 , L 4'        L 15 , L 15'
   L 11 , L 11'     L 1 , L 1'        L 12 , L 12'
   L  8 , L  8'                       L 9 , L 9'
   L  5 , L  5'                       L 6 , L 6'
   L  2 , L  2'                       L 3 , L 3'
```